# EUROPEAN PATENT SPECIFICATION

(11) **EP 3 413 722 B1**
(45) Date of publication and mention of the grant of the patent: **25.12.2019**
(21) Application number: 17709046.1
(22) Date of filing: 06.03.2017
(51) Int. Cl.: A23G 1/54

(54) **KIT AND PROCEDURE FOR PRODUCING AN EDIBLE EGG BASED ON CHOCOLATE AND/OR CREAM, AND AN EDIBLE EGG REALIZED IN THIS WAY**
KIT UND VERFAHREN ZUR HERSTELLUNG EINES ESSBAREN EIES AUF BASIS VON SCHOKOLADE UND/ODER SAHNE SOWIE EIN AUF DIESE WEISE HERGESTELLTES ESSBARES EI
KIT ET PROCÉDURE DE PRODUCTION D'UN OEUF COMESTIBLE À BASE DE CHOCOLAT ET/OU DE CRÈME, ET OEUF COMESTIBLE AINSI OBTENU

(30) Priority: 10.03.2016 IT UA20161547 U
(43) Date of publication of application: 19.12.2018
(73) Proprietor: Luigi Zaini S.p.A., 20159 Milano (IT)
(72) Inventor: ZAINI, Luigi, 20122 Milano (IT)
(74) Representative: Rapisardi, Mariacristina
(86) International application number: PCT/EP2017/055169
(87) International publication number: WO 2017/153325

(56) References cited:
- EP-A1- 0 920 810
- EP-A1- 1 018 302
- EP-A1- 1 072 195
- EP-A2- 0 086 319
- DE-A1- 19 851 063
- GB-A- 416 970
- GB-A- 2 342 312
- JP-A- H02 100 633
- RU-C2- 2 449 550

## Description

The present invention relates to a kit and procedure for producing an edible egg based on chocolate and/or cream, and an edible egg realized in this way.

In the confectionery industry chocolate eggs are known, formed by two half-shells perimetrally joined for delimiting a compartment usually intended to house a surprise inside it. (f.i. EP1018302, EP1072195, GB416970)

The process generally used for realizing the egg envisages the forming and subsequent joining of the two half-shells.

To form a half-shell, the melted chocolate is poured until it fills a cavity of a mould.

Once filled, the mould is overturned and the layer of chocolate is calibrated according to the viscosity thereof and the mechanical actions, such as vibrations, exerted on the mould, before being cooled.

Alternatively, the layer of chocolate is calibrated with a cold punch which moulds the tempered chocolate on the wall of the mould.

The half-shell is perimetrally joined to another half-shell produced in the same way, possibly interposing a surprise between the half-shells.

One of the drawbacks of the known technique for producing chocolate eggs consists of the fact that in order to confer the necessary mechanical resistance it is necessary to provide a certain minimum thickness of chocolate.

However, the cost of the quantity of chocolate used has a significant influence on the price of the final product as well as having a significant calorie content.

The technical task of the present invention is, therefore, to realise a kit and procedure for producing an edible egg based on chocolate and/or cream, and an edible egg which allow the above-described technical drawbacks to be obviated.

Within the scope of this technical task, an object of the invention is to realise an edible egg which, with the same dimensions, envisages the use of a lower quantity of chocolate and/or cream and a reduced calorie content.

Another object of the invention is to realize an edible egg which, with the same dimensions, has adequate mechanical resistance although produced with a reduced quantity of chocolate and/or cream.

The technical task, as well as these and other objects according to the present invention are achieved by realizing a kit for producing an edible egg, comprising a first mould for producing at least one wafer biscuit half-shell and a second mould for producing at least one chocolate and/or cream half-shell, characterized in that the first mould comprises a male half-mould and a female half-mould, which delimit a moulding cavity uniformly exhibiting a decrease in thickness along a perimeter edge thereof, and the second mould comprises a male half-mould and a female half-mould, which delimit a moulding cavity uniformly exhibiting an increase in thickness along a perimeter edge thereof.

In a preferred embodiment of the invention the cavity of the first mould has a central portion of a constant thickness and a peripheral portion that exhibits said decrease in thickness with respect to the central portion thereof, and the cavity of the second mould has a central portion of a constant thickness and a peripheral portion that exhibits said increase in thickness with respect to the central portion thereof.

In a preferred embodiment of the invention the sum of the thicknesses of the cavities of the first mould and the second mould at the perimeter edge thereof is equal to the sum of the thicknesses of the cavities of the first mould and the second mould at the central portions thereof.

Alternatively, it may be envisaged that the sum of the thicknesses of the cavities of the first mould and the second mould at the perimeter edge thereof is greater than the sum of the thicknesses of the cavities of the first mould and the second mould at the central portions thereof.

In a preferred embodiment of the invention the thickness of the cavity of the first mould at the central portion thereof is greater than the thickness of the cavity of the second mould at the central portion thereof.

In a preferred embodiment of the invention the thickness of the cavity of the first mould at the perimeter edge thereof is equal to the thickness of the cavity of the second mould at the perimeter edge thereof.

In a preferred embodiment of the invention said decrease in thickness is defined by a discontinuity in the variation in the curvature of a surface of the female half-mould of the first mould.

In a preferred embodiment of the invention said increase in thickness is defined by a discontinuity in the variation in the curvature of a surface of the male half-mould of the second mould.

The present invention also discloses an edible egg comprising two half-parts, each one comprising a chocolate and/or cream half-shell internally covered by a wafer biscuit half-shell, characterized in that it exhibits a uniform increase in the thickness of the chocolate along a perimeter edge of the chocolate and/or cream half-shell and a uniform decrease in the thickness of the wafer biscuit along a perimeter edge of the wafer biscuit half-shell.

In a preferred embodiment of the invention the chocolate half-shell has a central portion in which the chocolate and/or cream is of a constant thickness and a peripheral portion in which the chocolate and/or cream exhibits said increase in thickness with respect to the thickness of the chocolate and/or cream in said central portion, and in that the wafer biscuit half-shell has a central portion in which the wafer biscuit is of a constant thickness and a peripheral portion in which the wafer biscuit exhibits said decrease in thickness with respect to the thickness of the wafer biscuit in said central portion.

In a preferred embodiment of the invention the perimeter edge of the wafer biscuit half-shell is set back with respect to the perimeter edge of the chocolate and/or cream half-shell.

In a preferred embodiment of the invention in said central portion the thickness of the wafer biscuit is greater than the thickness of the chocolate.

In a preferred embodiment of the invention the sum of the thickness of the chocolate and/or cream and the wafer biscuit at said central portion is equal to the sum of the thickness of the chocolate and/or cream and the wafer biscuit at the perimeter edge of the chocolate and/or cream half-shell and the wafer biscuit half-shell.

In a preferred embodiment of the invention the uniform increase in thickness of the chocolate and/or cream half-shell and the uniform decrease in thickness of the wafer biscuit half-shell are defined by a discontinuity in the variation of the radius of curvature of matching surfaces between the chocolate and/or cream half-shell and the wafer biscuit half-shell.

Finally, the present invention discloses a procedure for realizing an edible egg made up of two chocolate and/or cream half-shells, each one internally covered by a corresponding supporting half-shell made of wafer biscuit, characterized in that it comprises the following steps:
- moulding the two chocolate and/or cream half-shells with a uniform increase in the thickness along a perimeter edge thereof;
- moulding the two wafer biscuit half-shells with a uniform decrease in the thickness along a perimeter edge thereof;
- assembling each chocolate and/or cream half-shell with the corresponding wafer biscuit half-shell, arranging the perimeter edge of the wafer biscuit half-shell in a position set back from the perimeter edge of the corresponding chocolate and/or cream half-shell;
- following assembly, juxtaposing the two chocolate and/or cream half-shells along their perimeter edges, so as to create a gap between the spaced perimeter edges of said wafer biscuit half-shells; and
- joining the two juxtaposed chocolate and/or cream half-shells by heating so as to soften said juxtaposed perimeter edges, thus causing interpenetration of said juxtaposed perimeter edges and causing the chocolate to spread in said gap.

In substance, the present invention provides a chocolate and/or cream egg in which the internal wafer biscuit half-shells constitute a support for the external chocolate and/or cream shells so as to confer the necessary mechanical resistance to the product without it being necessary to greatly increase the thickness of the chocolate and/or cream half-shells.

The mechanical resistance is optimised by the special provision of thicker perimeter edges of the chocolate and/or cream half-shells which provide a localized excess of material necessary for realizing a solid join between the two half-shells.

Advantageously the thickening of the perimeter edges of the chocolate and/or cream half-shells is compensated by a thinning to the same extent of the perimeter edges of the wafer biscuit half-shells.

The setting back of the perimeter edges of the wafer biscuit half-shells prevents any fragments, even partially detached from the perimeter edges of the wafer biscuit half-shells at the end of moulding, becoming interposed between the perimeter edges of the juxtaposed chocolate and/or cream half-shells and hampering the correct joining thereof.

Advantageously, the chocolate and/or cream that melts during the joining flows into the gap between the perimeter edges of the wafer biscuit half-shells and creates a connection seam between them which consolidates the join.

Further characteristics and advantages of the invention will become more clearly evident from the description of a preferred but non-limiting embodiment of the edible egg, kit and method for its realization according to the invention, illustrated by way of non-limiting example in the appended drawings, in which:

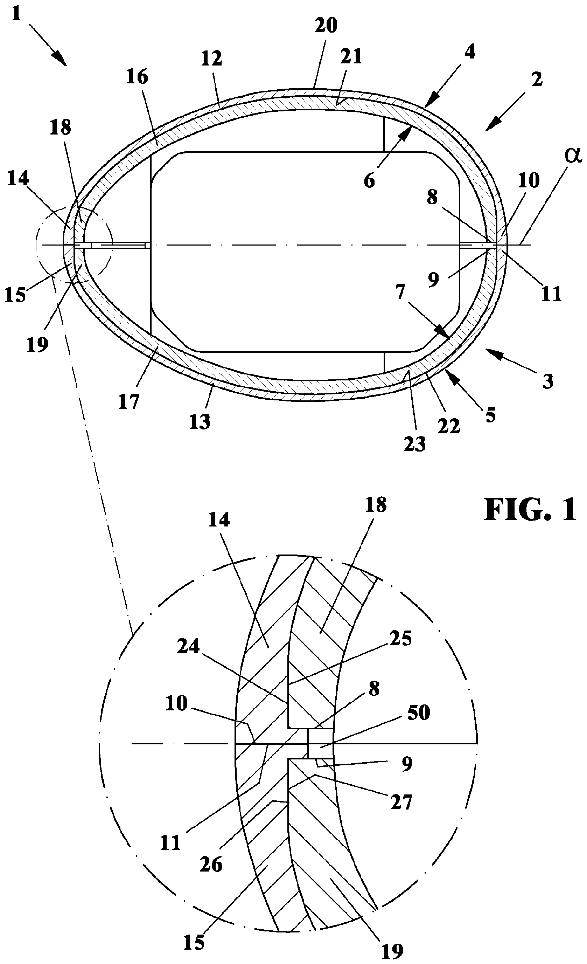

figure 1 shows a section of the egg in its orthogonal plane to the joining plane of the perimeter edges of the two chocolate and/or cream half-shells, with a container inside for a surprise;

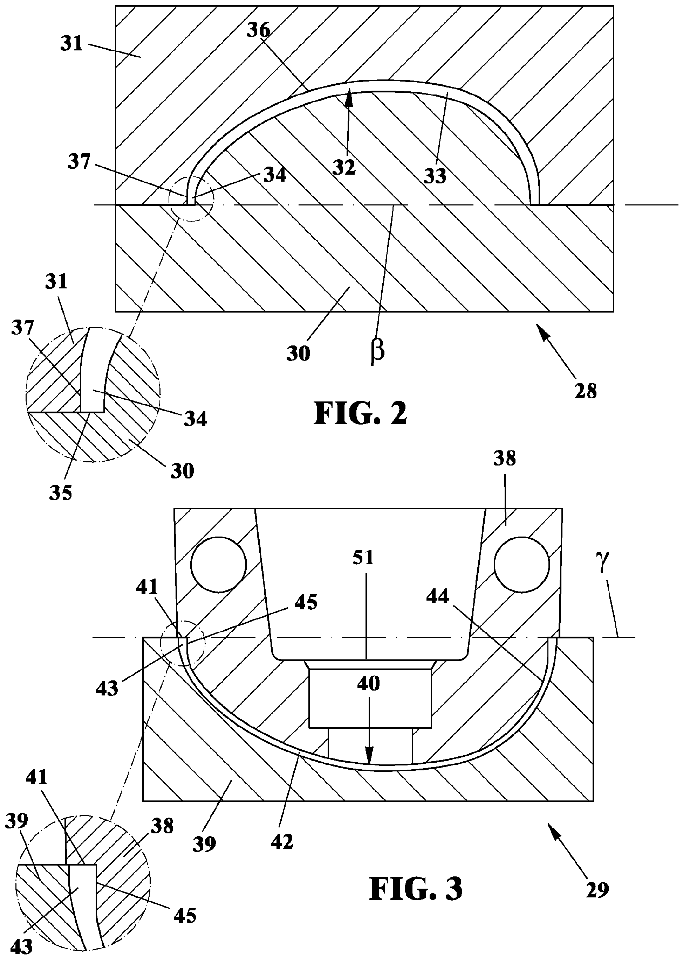

figure 2 is a sectioned lateral elevation of the first closed mould;
figure 3 is a sectioned lateral elevation of the second closed mould;

With reference to the figures mentioned, an edible egg is shown indicated overall with the reference number 1.

The egg 1 comprises two identical half-shells 2, 3 each in turn comprising a chocolate and/or cream half-shell 4, 5 internally covered by a corresponding wafer biscuit half-shell 6, 7.

In the solution shown purely by way of example the perimeter edge 8, 9 of each wafer biscuit half-shell 6, 7 is set back from the perimeter edge 10, 11 of the corresponding chocolate and/or cream half-shell 4, 5.

Advantageously, the egg 1 has a uniform increase in thickness of chocolate along the whole perimeter edge 10, 11 of each chocolate and/or cream half-shell 4, 5 and a uniform decrease in thickness of each wafer biscuit along the whole perimeter edge 8, 9 of each wafer biscuit half-shell 6, 7.

In particular, each chocolate and/or cream half-shell 4, 5 has a central portion 12, 13 in which the chocolate has a constant thickness and a peripheral portion 14, 15 including the perimeter edge 10, 11 of each chocolate and/or cream half-shell 4, 5 in which the chocolate has a uniform increase in thickness with respect to the thickness of the chocolate and/or cream in the central portion 12, 13.

Each wafer biscuit half-shell 6, 7 instead has a central portion 16, 17 in which the wafer biscuit has a constant thickness and a peripheral portion 18, 19 including the perimeter edge 8, 9 of each wafer biscuit half-shell 6, 7 in which the wafer biscuit has a uniform decrease in thickness with respect to the thickness of the wafer biscuit in the central portion 16, 17.

The central portion 16, 17 of each wafer biscuit half-shell 6, 7 has a greater thickness than that of the central portion 12, 13 of each chocolate and/or cream half-shell 4, 5.

The sum of the thickness of chocolate at the central portion 12, 13 of each chocolate and/or cream half-shell 4, 5 and the thickness of the wafer biscuit at the central portion 16, 17 of each wafer biscuit half-shell 6, 7 is the same as the sum of the thickness of chocolate and/or cream at the perimeter edge 10, 11 of each chocolate and/or cream half-shell 4, 5 and the thickness of each wafer biscuit at the perimeter edge 8, 9 of each wafer biscuit half-shell 6, 7.

By way of example, an egg is realized that has a height of approximately 70 mm and a width of approximately 50 mm with a thickness of chocolate and/or cream equal to 1 mm at the central portion 12, 13 of each chocolate and/or cream half-shell 4, 5, with a thickness of 2 mm of the wafer biscuit at the central portion 16, 17 of each wafer biscuit half-shell 6, 7, with a thickness of chocolate and/or cream of 1.5 mm at the perimeter edge 10, 11 of each chocolate and/or cream half-shell 4, 5 and a thickness of 1.5 mm of wafer biscuit at the perimeter edge 8, 9 of each wafer biscuit half-shell 6, 7.

The thickening of each chocolate and/or cream half-shell 4, 5 and the thinning of each wafer biscuit half-shell 6, 7 are defined by a discontinuity in the variation of the radius of curvature of matching surfaces 20, 21, 22, 23 between each chocolate and/or cream half-shell 4, 5 and the corresponding wafer biscuit half-shell 6, 7.

In particular, such matching surfaces 20, 21, 22, 23 have a discontinuity in the variation of the radius of curvature considered in reference to any orthogonal plane to the joining plane α between two half-parts 2, 3, thus defining defining flattened areas 24, 25, 26, 27 of the matching surfaces 20, 21, 22, 23.

The kit for producing the egg 1, comprises a first mould 28 for producing the wafer biscuit half-shell 6, 7 and a second mould 29 for producing the chocolate and/or cream half-shell 4, 5.

The first mould 28 comprises a male half-mould 30 and a female half-mould 31, which delimit a thin moulding cavity 32 uniformly exhibiting a decrease in thickness along a perimeter edge 35 thereof.

The cavity 32 of the first mould 28 has a central portion 33 of a constant thickness and a peripheral portion 34 that exhibits the decrease in thickness with respect to the central portion 33 thereof.

The decrease in thickness of the peripheral portion 34 is defined by a discontinuity in the variation in the curvature of a surface 36 of the female half-mould 31 of the first mould 28.

In particular, the surface 36 of the female half-mould 31 of the first mould 28, from which the external surface of the wafer biscuit half-mould 6, 7 is afforded, displays a discontinuity in the variation of the radius of curvature, considered with reference to any orthogonal plane to the plane β in which the perimeter edge 35 of the cavity 36 lies, thus defining a flattened area 37 of the surface 36.

The second mould 29 comprises a male half-mould 38 and a female half-mould 39, which delimit a thin moulding cavity 40 uniformly exhibiting an increase in thickness along a perimeter edge 41 thereof.

The cavity 40 of the second mould 29 has a central portion 42 of a constant thickness and a peripheral portion 43 that exhibits the increase in thickness with respect to the central portion 42 thereof.

The increase in thickness of the peripheral portion 43 is defined by a discontinuity in the variation in the radius of curvature of a surface 44 of the male half-mould 39 of the second mould 29.

In particular, the surface 44 of the male half-mould 39 of the second mould 29, from which the internal surface of the chocolate half-mould 4, 5 is afforded, displays a discontinuity in the variation of the radius of curvature, considered with reference to any orthogonal plane to the plane γ in which the perimeter edge 41 of the cavity 40 lies, thus defining a flattened area 45 of the surface 44.

The thickness of the cavity 32 of the first mould 28 at the central portion 33 thereof is greater than the thickness of the cavity 40 of the second mould 29 at the central portion 42 thereof.

Furthermore, the thickness of the cavity 32 of the first mould 28 at the perimeter edge 35 thereof is equal to the thickness of the cavity 40 of the second mould 29 at the perimeter edge 41 thereof.

Finally, the sum of the thickness of the cavity 32 of the first mould 28 and of the cavity 40 of the second mould 29 at the perimeter edge 35, 41 thereof is equal to the sum of the thickness of the cavity 32 of the first mould 28 and of the cavity 40 of the second mould 29 at the central portion 33, 42 thereof.

It is to be noted that the first mould 28 and/or the second mould 29 may each have a plurality of identical moulding cavities 32, 40 ordered in a matrix-like way for the simultaneous moulding of various chocolate and/or cream half-shells and/or various wafer biscuit half-shells.

The procedure for the realization of the egg 1, in the non-limiting example in which the external shell is made of chocolate, is as follows.

Through the first mould 28 the wafer biscuit half-shells 6, 7 are moulded.

In particular, after positioning a mixture on the male half-mould 30 the first mould 28 is closed, keeping the male half-mould 30 still and making the female half-mould 31 descend onto the male half-mould 30 which by crushing the mixture causes it to spread uniformly into the moulding cavity 32.

When the moulded product solidifies, the first mould 28 is opened, and the rough wafer biscuit half-shells 6, 7 are extracted, which are finally finished by milling to confer suitable smoothness and uniformity to their perimeter edges 8, 9.

Through the second mould 29 the chocolate half-shells 4, 5 are moulded.

The male half-shell 38 has an opening 51 into which an injector (not shown) is fixed.

The injector is equipped with a heating means for maintaining the correct temperature of the tempered chocolate at the inlet to the moulding cavity 40 and a heat insulation system for isolating the heating means from the male semi-mould 38 which is instead cooled for the solidification of the melted chocolate injected into the moulding cavity 40.

In substance, the second mould 29 is first closed, then the injector injects the melted chocolate into the moulding cavity, and finally, after the solidification of the moulded product, the second mould 29 opens.

At this point, for the assembly of each of the two parts 2, 3 of the egg 1, the wafer biscuit half-shells are inserted into the respective chocolate half-shells making the external surface of the wafer biscuit half-shells 6, 7 match the internal surface of the corresponding chocolate half-shells 4, 5 after having appropriately heated the chocolate half-shells 4, 5.

On this point, the wafer biscuit half-shells 6, 7 have a conjugated shape to the chocolate half-shells 4, 5 with the exception that they have a slightly lower height hence, when located in the assembly position, their perimeter edge 8, 9 is arranged slightly set back from the perimeter edge 10, 11 of the chocolate half-shells 4, 5.

Subsequently, the two parts 2, 3 are joined, juxtaposing the two chocolate and/or cream half-shells 4, 5 along their perimeter edges 10, 11, so as to create a gap 50 between the spaced perimeter edges 8, 9 of the wafer biscuit half-shells 6, 7.

Finally, the two juxtaposed chocolate half-shells 4, 5 are joined together by heating so as to soften their juxtaposed perimeter edges 10, 11 in order to cause the interpenetration of the juxtaposed perimeter edges 10, 11 and the chocolate to spread which fills at least in part the gap 50.

The kit and procedure for realising the egg based on chocolate and/or cream and the egg based on chocolate and/or cream thus conceived are susceptible to numerous modifications and variants, all of which falling within the scope of the inventive concept. Moreover, all details may be replaced with other technically equivalent elements.

In practice the materials used, as well as the dimensions, can be any according to needs and the state of the art.

## Claims

1. A kit for producing an edible egg, comprising a first mould (28) for producing at least one wafer biscuit half-shell (6, 7) and a second mould (29) for producing at least one chocolate and/or cream half-shell (4, 5), **characterized in that** the first mould (28) comprises a male half-mould (30) and a female half-mould (31), which delimit a moulding cavity (32) uniformly exhibiting a decrease in thickness along a perimeter edge (35) thereof, and the second mould (29) comprises a male half-mould (38) and a female half-mould (39), which delimit a moulding cavity (40) uniformly exhibiting an increase in thickness along a perimeter edge (41) thereof.

2. The kit for producing an edible egg according to claim 1, **characterized in that** the cavity (32) of the first mould (28) has a central portion (33) of a constant thickness and a peripheral portion (34) that exhibits said decrease in thickness with respect to the central portion (33) thereof, and the cavity (40) of the second mould (29) has a central portion (42) of a constant thickness and a peripheral portion (43) that exhibits said increase in thickness with respect to the central portion (42) thereof.

3. The kit for producing an edible egg according to claim 2, **characterized in that** the sum of the thicknesses of the cavities (32, 40) of the first mould (28) and the second mould (29) at the perimeter edge (35, 41) thereof is equal to the sum of the thicknesses of the cavities (32, 40) of the first mould (28) and the second mould (29) at the central portions (33, 42) thereof.

4. The kit for producing an edible egg according to any of claims 2 or 3, **characterized in that** the thickness of the cavity (32) of the first mould (28) at the central portion (33) thereof is greater than the thickness of the cavity (40) of the second mould (29) at the central portion (42) thereof.

5. The kit for producing an edible egg according to any preceding claim, **characterized in that** the thickness of the cavity (32) of the first mould (28) at the perimeter edge (35) thereof is equal to the thickness of the cavity (40) of the second mould (29) at the perimeter edge (41) thereof.

6. The kit for producing an edible egg according to claim 1, **characterized in that** said decrease in thickness is defined by a discontinuity in the variation in the curvature of a surface (36) of the female half-mould (31) of the first mould (28).

7. The kit for producing an edible egg according to claim 1, **characterized in that** said increase in thickness is defined by a discontinuity in the variation in the curvature of a surface (44) of the male half-mould (38) of the second mould (29).

8. An edible egg (1) comprising two half-parts (2, 3), each one comprising a chocolate and/or cream half-shell (4, 5) internally covered by a wafer biscuit half-shell (6, 7), **characterized in that** it exhibits a uniform increase in the thickness of the chocolate along a perimeter edge (9, 11) of the chocolate and/or cream half-shell (4, 5) and a uniform decrease in the thickness of the wafer biscuit along a perimeter edge (8, 9) of the wafer biscuit half-shell (6, 7).

9. The edible egg (1) according to claim 8, **characterized in that** the chocolate and/or cream half-shell (4, 5) has a central portion (12, 13) in which the chocolate and/or cream is of a constant thickness and a peripheral portion (14, 15) in which the chocolate and/or cream exhibits said increase in thickness with respect to the thickness of the chocolate and/or cream in said central portion (12, 13), and **in that** the wafer biscuit half-shell (6, 7) has a central portion (16, 17) in which the wafer biscuit is of a constant thickness and a peripheral portion (18, 19) in which the wafer biscuit exhibits said decrease in thickness with respect to the thickness of the wafer biscuit in said central portion (16, 17).

10. The edible egg (1) according to any of claims 8 or 9, **characterized in that** the perimeter edge (8, 9) of said wafer biscuit half-shell (6, 7) is set back with respect to the perimeter edge (10, 11) of said chocolate half-shell (4, 5).

11. The edible egg (1) according to any of claims 9 or 10, **characterized in that** in said central portion (12, 13, 16, 17), the thickness of the wafer biscuit is greater than the thickness of the chocolate and/or cream.

12. The edible egg (1) according to any one of claims 9 to 11, **characterized in that** the sum of the thickness of the chocolate and/or cream and the wafer biscuit at said central portions (12, 13, 16, 17) is equal to the sum of the thickness of the chocolate and/or cream and the wafer biscuit at the perimeter edge (8, 9, 10, 11) of the chocolate and/or cream half-shell (4, 5) and the wafer biscuit half-shell (6, 7).

13. The edible egg (1) according to any one of claims 8 to 12, **characterized in that** said uniform increase in thickness and said uniform decrease in thickness are defined by a discontinuity in the variation of the radius of curvature of matching surfaces (20, 21, 22, 23) between the chocolate and/or cream half-shell (4, 5) and the wafer biscuit half-shell (6, 7).

14. The edible egg (1) according to claim 13, **characterized in that** the matching surfaces (20, 21, 22, 23) have a radius of curvature change defining flattened areas (24, 25, 26, 27).

15. A procedure for realizing an edible egg (1) made up of two half-shells (4, 5) made of chocolate, each one internally covered by a corresponding supporting half-shell made of wafer biscuit (6, 7), **characterized in that** it comprises the following steps:
- moulding the two chocolate and/or cream half-shells (4, 5) with a uniform increase in the thickness along a perimeter edge (9, 10) thereof;
- moulding the two wafer biscuit half-shells (6, 7) with a uniform decrease in the thickness along a perimeter edge (11, 12) thereof;
- assembling each chocolate and/or cream half-shell (4, 5) with the corresponding wafer biscuit half-shell (6, 7), arranging the perimeter edge (8, 9) of the wafer biscuit half-shell in a position set back from the perimeter edge (10, 11) of the corresponding chocolate and/or cream half-shell (4, 5);
- following assembly, juxtaposing the two chocolate and/or cream half-shells (4, 5) along their perimeter edges (10, 11), so as to create a gap (50) between the spaced perimeter edges (8, 9) of said wafer biscuit half-shells (6, 7); and
- joining the two juxtaposed chocolate and/or cream half-shells (4, 5) by heating so as to soften said juxtaposed perimeter edges (10, 11), thus causing interpenetration of said juxtaposed perimeter edges (10, 11) and causing the chocolate and/or cream to spread in said gap (50).

## Patentansprüche

1. Kit zur Herstellung eines essbaren Eies, umfassend eine erste Form (28) zur Herstellung mindestens einer Waffelkekshalbschale (6, 7) und eine zweite Form (29) zur Herstellung mindestens einer Schokoladen- und/oder Sahnehalbschale (4, 5), **dadurch gekennzeichnet, dass** die erste Form (28) eine männliche Formhälfte (30) und eine weibliche Formhälfte (31) umfasst, die einen Formhohlraum (32) begrenzen, der gleichmäßig eine Dickenabnahme entlang einer Umfangskante (35) davon aufweist, und die zweite Form (29) eine männliche Formhälfte (38) und eine weibliche Formhälfte (39) umfasst, die einen Formhohlraum (40) begrenzen, der gleichmäßig eine Dickenzunahme entlang einer Umfangskante (41) davon aufweist.

2. Kit zur Herstellung eines essbaren Eies nach Anspruch 1, **dadurch gekennzeichnet, dass** der Hohlraum (32) der ersten Form (28) einen Mittelabschnitt (33) mit einer konstanten Dicke und einen Umfangsabschnitt (34) aufweist, der die Dickenabnahme in Bezug auf dessen Mittelabschnitt (33) aufweist, und der Hohlraum (40) der zweiten Form (29) einen Mittelabschnitt (42) mit einer konstanten Dicke und einen Umfangsabschnitt (43) aufweist, der die Dickenzunahme in Bezug auf dessen Mittelabschnitt (42) aufweist.

3. Kit zur Herstellung eines essbaren Eies nach Anspruch 2, **dadurch gekennzeichnet, dass** die Summe der Dicken der Hohlräume (32, 40) der ersten Form (28) und der zweiten Form (29) an der Umfangskante (35, 41) davon gleich der Summe der Dicken der Hohlräume (32, 40) der ersten Form (28) und der zweiten Form (29) an den Mittelabschnitten (33, 42) davon ist.

4. Kit zur Herstellung eines essbaren Eies nach einem der Ansprüche 2 oder 3, **dadurch gekennzeichnet, dass** die Dicke des Hohlraums (32) der ersten Form (28) an dessen Mittelabschnitt (33) größer als die Dicke des Hohlraums (40) der zweiten Form (29) an dessen Mittelabschnitt (42) ist.

5. Kit zur Herstellung eines essbaren Eies nach einem der vorhergehenden Ansprüche, **dadurch gekennzeichnet, dass** die Dicke des Hohlraums (32) der ersten Form (28) an dessen Umfangskante (35) gleich der Dicke des Hohlraums (40) der zweiten Form (29) an dessen Umfangskante (41) ist.

6. Kit zur Herstellung eines essbaren Eies nach Anspruch 1, **dadurch gekennzeichnet, dass** die Dickenabnahme durch eine Diskontinuität in der Änderung der Krümmung einer Oberfläche (36) der weiblichen Formhälfte (31) der ersten Form (28) definiert ist.

7. Kit zur Herstellung eines essbaren Eies nach Anspruch 1, **dadurch gekennzeichnet, dass** die Dickenzunahme durch eine Diskontinuität in der Änderung der Krümmung einer Oberfläche (44) der männlichen Formhälfte (38) der zweiten Form (29) definiert ist.

8. Essbares Ei (1) mit zwei Halbteilen (2, 3), die jeweils eine Schokoladen- und/oder Sahnehalbschale (4, 5) umfassen, die innen von einer Waffelkekshalbschale (6, 7) bedeckt sind, **dadurch gekennzeichnet, dass** es eine gleichmäßige Dickenzunahme der Schokolade entlang einer Umfangskante (9, 11) der Schokoladen- und/oder Sahnehalbschale (4, 5) und eine gleichmäßige Dickenabnahme des Waffelkekses entlang einer Umfangskante (8, 9) der Waffelkekshalbschale (6, 7) aufweist.

9. Essbares Ei (1) nach Anspruch 8, **dadurch gekennzeichnet, dass** die Schokoladen- und/oder Sahnehalbschale (4, 5) einen Mittelabschnitt (12, 13) aufweist, in dem die Schokolade und/oder Sahne eine konstante Dicke aufweist und einen Umfangsabschnitt (14, 15) aufweist, in der die Schokolade und/oder Sahne die Dickenzunahme in Bezug auf die Dicke der Schokolade und/oder Sahne in dem Mittelabschnitt (12, 13) aufweist und dadurch, dass die Waffelkekshalbschale (6, 7) einen Mittelabschnitt (16, 17) aufweist, in dem der Waffelkeks eine konstante Dicke und einen Umfansgabschnitt (18, 19) aufweist, in dem der Waffelkeks die Dickenabnahme in Bezug auf die Dicke des Waffelkekses in dem Mittelabschnitt (16, 17) aufweist.

10. Essbares Ei (1) nach einem der Ansprüche 8 oder 9, **dadurch gekennzeichnet, dass** die Umfangskante (8, 9) der Waffelkekshalbschale (6, 7) in Bezug auf die Umfangskante (10, 11) der Schokoladenhalbschale (4, 5) zurückgesetzt ist.

11. Essbares Ei (1) nach einem der Ansprüche 9 oder 10, **dadurch gekennzeichnet, dass** in dem Mittelabschnitt (12, 13, 16, 17) die Dicke des Waffelkekses größer als die Dicke der Schokolade und/oder Sahne ist.

12. Essbares Ei (1) nach einem der Ansprüche 9 bis 11, **dadurch gekennzeichnet, dass** die Summe der Dicke der Schokolade und/oder Sahne und des Waffelkekses an den Mittelabschnitten (12, 13, 16, 17) gleich der Summe der Dicke der Schokolade und/oder Sahne und des Waffelkekses an der Umfangskante (8, 9, 10, 11) der Schokoladen- und/oder Sahnehalbschale (4, 5) und der Waffelkekshalbschale (6, 7) ist.

13. Essbares Ei (1) nach einem der Ansprüche 8 bis 12, **dadurch gekennzeichnet, dass** die gleichmäßige Dickenzunahme und die gleichmäßige Dickenabnahme durch eine Diskontinuität in der Änderung des Krümmungsradius der Anpassungsflächen (20, 21, 22, 23) zwischen der Schokoladen- und/oder Sahnehalbschale (4, 5) und der Waffelkekshalbschale (6, 7) definiert sind.

14. Essbares Ei (1) nach Anspruch 13, **dadurch gekennzeichnet, dass** die Anpassungsflächen (20, 21, 22, 23) einen Krümmungsveränderungsradius aufweisen, der abgeflachte Bereiche (24, 25, 26, 27) definiert.

15. Verfahren zur Herstellung eines aus zwei Halbschalen (4, 5) bestehenden essbaren Eies (1) aus Schokolade, von denen jede innen von einer entsprechenden tragenden Halbschale aus Waffelkeks (6, 7) bedeckt ist, **dadurch gekennzeichnet, dass** es die folgenden Schritte umfasst:
- Formen der zwei Schokoladen- und/oder Sahnehalbschalen (4, 5) mit einer gleichmäßigen Dickenzunahme entlang einer Umfangskante (9, 10) davon;
- Formen der zwei Waffelkekshalbschalen (6, 7) mit einer gleichmäßigen Dickenabnahme entlang einer Umfangskante (11, 12) davon;
- Zusammensetzen jeder Schokoladen- und/oder Sahnehalbschale (4, 5) mit der entsprechenden Waffelkekshalbschale (6, 7), Anordnen der Umfangskante (8, 9) der Waffelkekshalbschale in einer von der Umfangskante (10, 11) der entsprechenden Schokoladen- und/oder Sahnehalbschale (4, 5) zurückgesetzten Position;
- Nebeneinander legen, nach dem Zusammenbau, der zwei Schokoladen- und/oder Sahnehalbschalen (4, 5) entlang ihrer Umfangskanten (10, 11), um einen Spalt (50) zwischen den beabstandeten Umfangskanten (8, 9) der Waffelkekshalbschalen (6, 7) zu erzeugen; und
- Verbinden der zwei nebeneinander liegenden Schokoladen- und/oder Sahnehalbschalen (4, 5) durch Erhitzen, um die nebeneinander liegenden Umfangskanten (10, 11) zu erweichen, wodurch ein gegenseitiges Durchdringen der nebeneinander liegenden Umfangskanten (10, 11) bewirkt wird und das Verteilen der Schokolade und/oder der Sahne in dem Spalt (50) bewirkt.

## Revendications

1. Kit de production d'un œuf comestible, comprenant un premier moule (28) servant à produire au moins une demi-coque (6, 7) de gaufrette et un second moule (29) servant à produire au moins une demi-coque (4, 5) de chocolat et/ou de crème, **caractérisé en ce que** le premier moule (28) comprend un demi-moule (30) mâle et un demi-moule (31) femelle qui délimitent une cavité de moulage (32) présentant uniformément une réduction d'épaisseur le long d'un bord périphérique (35) de celle-ci, et le second moule (29) comprend un demi-moule (38) mâle et un demi-moule (39) femelle qui délimitent une cavité de moulage (40) présentant uniformément une augmentation d'épaisseur le long d'un bord périphérique (41) de celle-ci.

2. Kit de production d'un œuf comestible selon la revendication 1, **caractérisé en ce que** la cavité (32) du premier moule (28) comporte une partie centrale (33) d'une épaisseur constante et une partie périphérique (34) présentant ladite réduction d'épaisseur par rapport à la partie centrale (33) de celle-ci, et la cavité (40) du second moule (29) comporte une partie centrale (42) d'une épaisseur constante et une partie périphérique (43) présentant ladite augmentation d'épaisseur par rapport à la partie centrale (42) de celle-ci.

3. Kit de production d'un œuf comestible selon la revendication 2, **caractérisé en ce que** la somme des épaisseurs des cavités (32, 40) du premier moule (28) et du second moule (29) en correspondance de leurs bords périphériques (35, 41) est égale à la somme des épaisseurs des cavités (32, 40) du premier moule (28) et du second moule (29) en correspondance de leurs parties centrales (33, 42).

4. Kit de production d'un œuf comestible selon l'une quelconque des revendications 2 ou 3, **caractérisé en ce que** l'épaisseur de la cavité (32) du premier moule (28) en correspondance de sa partie centrale (33) est supérieure à l'épaisseur de la cavité (40) du second moule (29) en correspondance de sa partie centrale (42) .

5. Kit de production d'un œuf comestible selon l'une quelconque des revendications précédentes, **caractérisé en ce que** l'épaisseur de la cavité (32) du premier moule (28) en correspondance de son bord périphérique (35) est égale à l'épaisseur de la cavité (40) du second moule (29) en correspondance de son bord périphérique (41).

6. Kit de production d'un œuf comestible selon la revendication 1, **caractérisé en ce que** ladite réduction d'épaisseur est définie par une discontinuité dans la variation de courbure d'une surface (36) du demi-moule (31) femelle du premier moule (28).

7. Kit de production d'un œuf comestible selon la revendication 1, **caractérisé en ce que** ladite augmentation d'épaisseur est définie par une discontinuité dans la variation de courbure d'une surface (44) du demi-moule (38) mâle du second moule (29).

8. Œuf comestible (1) comprenant deux moitiés (2, 3), chacune comprenant une demi-coque (4, 5) de chocolat et/ou de crème intérieurement recouverte par une demi-coque (6, 7) de gaufrette, **caractérisé en ce qu'**il présente une augmentation uniforme d'épaisseur de chocolat le long d'un bord périphérique (9, 11) de la demi-coque (4, 5) de chocolat et/ou de crème et une réduction uniforme d'épaisseur de gaufrette le long d'un bord périphérique (8, 9) de la demi-coque (6, 7) de gaufrette.

9. Œuf comestible (1) selon la revendication 8, **caractérisé en ce que** la demi-coque (4, 5) de chocolat et/ou de crème comporte une partie centrale (12, 13) dans laquelle le chocolat et/ou la crème a une épaisseur constante et une partie périphérique (14, 15) dans laquelle le chocolat et/ou la crème présente ladite augmentation d'épaisseur par rapport à l'épaisseur du chocolat et/ou de la crème dans ladite partie centrale (12, 13), et **en ce que** la demi-coque (6, 7) de gaufrette comporte une partie centrale (16, 17) dans laquelle la gaufrette a une épaisseur constante et une partie périphérique (18, 19) dans laquelle la gaufrette présente ladite réduction d'épaisseur par rapport à l'épaisseur de la gaufrette dans ladite partie centrale (16, 17).

10. Œuf comestible (1) selon l'une quelconque des revendications 8 ou 9, **caractérisé en ce que** le bord périphérique (8, 9) de ladite demi-coque (6, 7) de gaufrette est en retrait par rapport au bord périphérique (10, 11) de ladite demi-coque (4, 5) de chocolat.

11. Œuf comestible (1) selon l'une quelconque des revendications 9 ou 10, **caractérisé en ce que** dans ladite partie centrale (12, 13, 16, 17), l'épaisseur de la gaufrette est supérieure à l'épaisseur de chocolat et/ou de crème.

12. Œuf comestible (1) selon l'une quelconque des revendications de 9 à 11, **caractérisé en ce que** la somme de l'épaisseur de chocolat et/ou de crème et de gaufrette en correspondance desdites parties centrales (12, 13, 16, 17) est égale à la somme de l'épaisseur de chocolat et/ou de crème et de gaufrette en correspondance du bord périphérique (8, 9, 10, 11) de la demi-coque (4, 5) de chocolat et/ou de crème et de la demi-coque (6, 7) de gaufrette.

13. Œuf comestible (1) selon l'une quelconque des revendications de 8 à 12, **caractérisé en ce que** ladite augmentation uniforme d'épaisseur et ladite réduction uniforme d'épaisseur sont définies par une discontinuité dans la variation du rayon de courbure de surfaces (20, 21, 22, 23) qui se correspondent entre la demi-coque (4, 5) de chocolat et/ou de crème et la demi-coque (6, 7) de gaufrette.

14. Œuf comestible (1) selon la revendication 13, **caractérisé en ce que** les surfaces (20, 21, 22, 23) qui se correspondent ont un rayon de modification de courbure définissant des zones aplaties (24, 25, 26, 27).

15. Procédé de production d'un œuf comestible (1) composé de deux demi-coques (4, 5) de chocolat, chacune recouverte intérieurement par une demi-coque de support de gaufrette (6, 7) correspondante, **caractérisé en ce qu'**il comprend les étapes suivantes :
- mouler les deux demi-coques (4, 5) de chocolat et/ou de crème avec une augmentation uniforme d'épaisseur le long d'un bord périphérique (9, 10) de celles-ci ;
- mouler les deux demi-coques (6, 7) de gaufrette avec une réduction uniforme d'épaisseur le long d'un bord périphérique (11, 12) de celles-ci ;
- assembler chaque demi-coque (4, 5) de chocolat et/ou de crème à la demi-coque (6, 7) de gaufrette correspondante, disposer le bord périphérique (8, 9) de la demi-coque de gaufrette dans une position en retrait à partir du bord périphérique (10, 11) de la demi-coque (4, 5) correspondante de chocolat et/ou de crème ;
- après assemblage, juxtaposer les deux demi-coques (4, 5) de chocolat et/ou de crème le long de leurs bords périphériques (10, 11), de sorte à créer un espacement (50) entre les bords périphériques (8, 9) espacés desdites demi-coques (6, 7) de gaufrette ; et
- joindre les deux demi-coques (4, 5) juxtaposées de chocolat et/ou de crème par chauffage de manière à ramollir lesdits bords périphériques (10, 11) juxtaposés, en provoquant ainsi l'interpénétration desdits bords périphériques (10, 11) juxtaposés et en provoquant l'étalement du chocolat et/ou de la crème dans ledit espacement (50).
